# EUROPÄISCHE PATENTANMELDUNG

(11) **EP 0 553 398 A1**
(43) Veröffentlichungstag der Anmeldung: **04.08.1993**
(21) Anmeldenummer: 92116901.7
(22) Anmeldetag: 02.10.1992
(51) Int. Cl.: C25B 9/00, C02F 1/76, C02F 1/46

(54) **Elektrochemische Zelle mit Entgasungsvorrichtung**

(30) Priorität: 29.01.1992 DE 4202480
(71) Anmelder: HERAEUS ELEKTROCHEMIE GMBH, D-63450 Hanau (DE)
(72) Erfinder: Heinke, Harri, W-6455 Erlensee (DE); Blatt, Wolfgang, Dr., W-6480 Wächtersbach (DE)
(74) Vertreter: Kühn, Hans-Christian

(57) **Zusammenfassung**

Eine elektrochemische Zelle zur elektrolytischen Behandlung wässriger Lösungen insbesondere zur Cyanidentgiftung oder Oxidation weist einen Lösungsbehälter (16) mit aufgesetztem Zellengehäuse (8) auf, in dem sich ein Elektrodenpaket (3) befindet; mittels Umwälzvorrichtung wird dem Zellengehäuse im Bereich seines Gehäusebodens (13) Lösung zugeführt und nach Durchlaufen des Elektrodenpakets mittels Überlauf über die Seitenwände des Zellgehäuses einem kaskadenartig angeordneten Ablaufbehälter (32) mit einem eigenen Überlauf zwecks Entgasung zugeführt; nach Passieren des zweiten Überlaufs (31) wird die nunmehr weitgehend entgaste Lösung wieder in den Lösungsbehälter geleitet und erneut umgewälzt. Einfache kompakte Bauform mit druckfreiem Umwälz-System und einfacher Wartung des Elektrodenpakets bzw. der Einzelelektroden.

## Beschreibung

Die Erfindung betrifft eine elektrochemische Zelle zur elektrolytischen Behandlung wässriger Lösungen, insbesondere zur Cyanidentgiftung, Oxidation oder Elektrolyse von Natriumchloridlösung, wobei ein Zellengehäuse langgestreckte plattenförmige, parallel und im Abstand angeordnete Elektroden in Form eines austauschbaren Elektrodenpaketes mit benachbarten, kammartig ineinandergreifenden Elektroden, die abwechselnde Polarität aufweisen, enthält und alle Elektroden jeweils einer Polarität mittels seitlich angeschweißter Stromzuführungen aus lösungsbeständigem Werkstoff an einem der Kontaktierung und Halterung dienenden Stromzuleiter befestigt sind, wobei eine Flüssigkeits-Umwälzvorrichtung zur Anströmung der Elektroden von unten nach oben entlang ihrer Elektrodenfläche und eine Entgasungsvorrichtung mit getrenntem Flüssigkeitsablauf und mit einer getrennten Gasabführung mit Entgasungsbehälter vorgesehen ist.

Aus der DE-PS 31 38 438 ist eine kompakte direkt durchströmbare Zelle mit leicht auswechselbarem Elektrodenpaket bekannt, wobei durch Veränderung der Parameter wie Salzkonzentration, Durchflußmenge usw. die Anwendung den jeweiligen Bedürfnissen des Verwenders angepaßt werden kann; so kann beispielsweise durch niedrige Salzkonzentration und hohe Durchflußmenge eine hohe Salzausbeute erreicht werden; eine hohe Stromausbeute kann dagegegen durch hohe Salzkonzentration und niedrige Durchflußmenge erzielt werden.

Als problematisch erweist sich bei einer solchen Anordnung, daß die Fließgeschwindigkeit der Flüssigkeitsströmung langsamer sein muß, als die Steiggeschwindigkeit der in der Lösung enthaltenden Gasblasen, um eine vollständige Entgasung zu gewährleisten. Dabei werden die Gasblasen entlang der langgestreckten, kartuschenartigen Elektrodenflächen geführt, so daß der für die elektrochemische Umsetzung erforderliche Elektrolyt teilweise von den aktiven Elektrodenflächen abgedrängt wird. Weiterhin sind im Bereich des Elektrodenpaketes Dichtungsmaßnahmen erforderlich, um ein Ausfließen der unter Druck stehenden Lösung zu vermeiden.

Die Erfindung stellt sich die Aufgabe, eine elektrochemische Zelle mit einem offenen entgasungsfreundlichen System zu schaffen, bei dem Wärmestau und Folgeundichtheiten an Stomdurchführungen vermieden werden; weiterhin soll eine einfache und zuverlässige Wartung möglich sein, wobei insbesondere ein rascher Elektrodenwechsel bei Desaktivierung bzw. eine einfache Elektrodenentnahme zur Überprüfung der Elektrodenoberfläche und die Möglichkeit des Austausches eines ganzen Elektrodenpaketes gegeben sein soll; weiterhin soll auch die Möglichkeit der Reinigung der Elektroden während des Betriebes möglich sein.

Die Aufgabe wird durch die kennzeichnenden Merkmale des Anspruchs 1 gelöst. Weitere vorteilhafte Ausgestaltungen der Erfindung sind in den Unteransprüchen angegeben.

Der Gegenstand der Erfindung ist zur Behandlung von wässrigen Lösungen insbesondere zur Cyanidentgiftung, jedoch auch für andere elektrolytische Oxidationssysteme sowie für Lösungen mit einem Restgehalt von Metallionen im ppm-Bereich, sowie auch zur Elektrolyse von Natriumchlorid, zur Erzeugung von Hypochloritlösung und zur Sterilisation von Brauchwasser geeignet.

Ein wesentlicher Vorteil der Erfindung ist darin zu sehen, daß die Elektrolyt-Umwälzung ohne geschlossenes Drucksystem erfolgt, so daß neben einer raschen Entgasung der Flüssigkeit mittels der durchlaufenen Entgasungsstrecken auch auf besondere Dichtungsmaßnahmen im Bereich der Elektroden beziehungsweise ihrer Stromdurchführungen verzichtet werden kann; ein weiterer Vorteil eines solchen offenen Umwälzsystemes ist darin zu sehen, daß die Zellenentgasungsvorrichtung einen integralen Aufbau des Zellengehäuses darstellt.

In einer bevorzugten Ausführungsform sind in Strömungsrichtung der aus dem Zellgehäuse austretenden Flüssigkeit gesehen zwei aufeinanderfolgende Entgasungsstrecken angeordnet, wodurch sich vorteilhafterweise eine erhebliche Verbesserung der Entgasung erzielen läßt.

In einer weiteren bevorzugten Ausführungsform sind die Stromzuführungen als Kontaktbänder ausgebildet, die jeweils im Bereich der seitlichen Schmalseiten der Elektrodenplatten je nach Polarität wechselweise durch Verschweißen auf die Elektrodenfläche aufgebracht sind, wobei die freien Enden der Kontaktbänder oberhalb des Zellgehäuses im Anschlußbereich des Stromzuleiters zwecks Kontaktierung lösbar unter Preßdruck miteinander verbunden sind.

Diese Ausführungsform hat den Vorteil, daß die Stromdichte in den einzelnen Kontaktbändern verhältnismäßig gering ist, da jedes Kontaktband jeweils nur eine einzige Elektrode mit Strom zu versorgen hat und der Übergangswiderstand im Bereich des lösbaren Anschlusses an den Stromzuleiter sich außerhalb der Lösung befindet und somit gegen Korrosion geschützt ist, andererseits jedoch auch leicht lösbar ist.

In einer weiteren bevorzugten Ausführungsform sind nur zwei sich gegenüberliegende Seitenwände des Zellengehäuses als Überlauf ausgebildet, so daß die aus dem Zellengehäuse austretende Lösung in jeweils einen der beidseitig des Zellengehäuses angeordneten Auffangbehälter mit einem zweiten Überlauf geleitet wird; nach Passieren des jeweiligen zweiten Überlaufs gelangt die nunmehr entgaste Lösung über Abflußöffnungen in den Lösungsbehälter zurück.

Bei einer solchen Anordnung kann vorteilhafter Weise ein raumsparender kompakter Aufbau erzielt werden.

Im folgenden ist der Gegenstand der Erfindung anhand der Figuren 1 bis 4 näher erläutert.
Figur 1 zeigt ausschnittweise in einer perspektivischen Darstellung das Elektrodenpaket sowie das ihn umgebende wannenförmige Zellgehäuse zusammen mit dem auf einem Trog aufliegenden Zellgehäuseträger.
Figur 2 zeigt im Querschnitt Elektrodenpaket, Zellgehäuse, Zellgehäuseträger sowie Trog- und Umwälzeinrichtung zusammen mit der Entgasungsvorrichtung;
Figur 3 zeigt im Längsschnitt Elektrodenpaket, Zellgehäuse und Trog.
Figur 4 zeigt im Teilausschnitt das im Aufbau befindliche Zellengehäuse, wobei lediglich ein Überlauf entlang der Seitenwände vorgesehen ist.

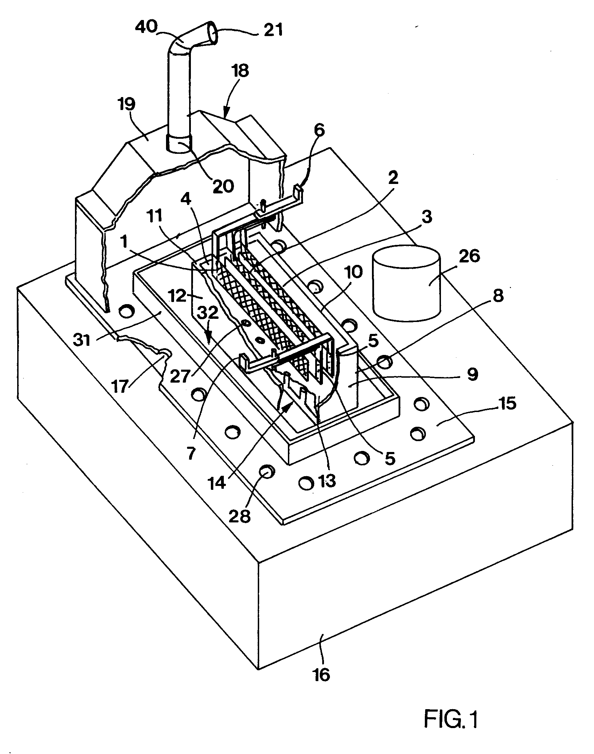

Figur 1 zeigt in einer teilweise aufgebrochenen und explosionsartig auseinandergezogenen perspektivischen Zeichnung das aus plattenförmigen Anoden 1 und plattenförmigen Kathoden 2 bestehende Elektrodenpaket 3, mit den jeweils im Bereich der Seitenkanten der Anoden aufgeschweißten Stromzuführungen 4 und den an den gegenüberliegenden Seitenkanten des Elektrodenpakets angeordneten Stromzuführungen 5, welche auf den Kathoden 2 aufgeschweißt sind. Die Stromzuführungen 4,5 sind oberhalb der Elektrodenplatten 1,2 gebündelt und durch Schrauben als Befestigungsmittel zusammengepreßt und mit Stromzuleitern 6,7, welche gleichzeitig als Halterung dienen elektrisch leitend und mechanisch lösbar verbunden. Das Elektrodenpaket 3 ist in ein wannenförmiges Zellgehäuse 8 soweit absenkbar, daß die Oberkanten der Anoden 1 und Kathoden 2 unterhalb der oberen Ränder der Seitenwände 9,10,11 und 12 des wannenförmigen Zellgehäuses 8 zum Liegen kommen. Der Boden 13 des Zellgehäuses 8 weist im Querschnitt ein ebenes bzw. U-förmiges Profil auf und ist an seinem unteren Bereich über Austrittsöffnungen 27 an ein Rohrverteilersystem 14 zwecks Lösungsumwälzung, mittels einer hier symbolisch dargestellten Pumpe 26, verbunden. Das Zellgehäuse 8 wird von einem plattenförmigen Zellgehäuseträger 15 umgeben, welcher mit seiner äußeren Randfläche die nach oben gerichtete Öffnung 17 eines Lösungsbehälters 16 abdeckt.

Das Zellgehäuse 8 ist von einem auf dem Zellgehäuseträger 15 befestigten zusätzlichen Überlauf 31 umgeben, wodurch ein Auffangbehälter 32 mit kaskadenartiger Entgasungsstrecke für die über die Oberkanten der Seitenwände 9, 10, 11, 12 überlaufende Lösung gebildet wird. Dies bedeutet, daß die Lösung nach der elektrolytischen Behandlung zunächst kaskadenartig auf den vom zusätzlichen Überlauf 31 umgrenzten Bereich des Zellgehäuse-Trägers fällt und von dort aus weiter in Richtung des zusätzlichen überlaufs strömt. Durch das zweimalige kaskadenartige Überlaufen und Fallen wird die Lösung ausreichend entgast und tritt nach Passieren des zusätzlichen Überlaufs 31 durch die Abführ-Öffnungen 28 und die nur ausschnittsweise dargestellte Öffnung 17 wieder in den Lösungsbehälter zurück.

Oberhalb des wannenförmigen Zellgehäuses 8 ist auf dem Zellgehäuseträger 15 eine im Querschnitt trapezförmige Gasabzugshaube 18 vorgesehen, deren im oberen Bereich befindliches Mittelstück 19 mit Öffnungen 20 zum Anschluß von Gasabzugsleitungen 21 versehen ist. Im Bereich der Öffnung 20 bzw. Gasabzugsleitung 21 kann ein Wasserstoff-Sensor 40 zur Überwachung eingesetzt werden.

In der Praxis stellen Zellgehäuse 8, Zellgehäuseträger 15 und überlauf 31 ein integrales Bauteil dar.

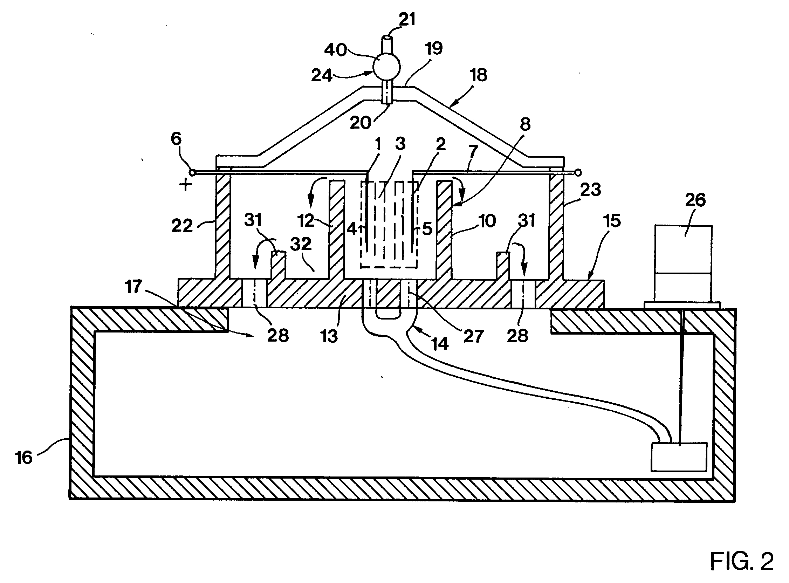

Gemäß Figur 2 ist das Elektrodenpaket 3 mittels der Stromzuleiter 6,7 an den die Gasabzugshaube 18 tragenden Seitenwänden 22,23 an der Gasabzugsvorrichtung 24 gehaltert. Anhand des Querschnittes des Elektrodenpaketes 3 ist erkennbar, daß wechselweise Anoden und Kathoden angeordnet sind, die über Stromzuführungen 4 und 5 jeweils mit den Stromzuleitern 6,7 verbunden sind. Der Zellgehäuseträger 15 weist in unmittelbarer Nachbarschaft zum Zellgehäuse 8 und dem zusätzlichen Überlauf 31 Abflußöffnungen 28 auf, welche den aus dem Zellgehäuse 8 austretenden Elektrolyten bzw. Lösung in den unterhalb des Zellgehäuseträgers befindlichen Lösungsbehälter 16 leiten. Die durch Überlauf aus Zellgehäuse 8 austretende Flüssigkeit durchläuft somit zwei in Strömungsrichtung gesehen kaskadenartig aufeinanderfolgende Entgasungsstrecken. Weiterhin ist die mit dem Rohrverteilersystem 14 verbundene Pumpe 26 erkennbar, welche aus dem Lösungsbehälter 16 Lösung über das Rohrverteilersystem 14 in das wannenförmige Zellgehäuse 8 pumpt. Die Lösungsmittelzufuhr in den Behälter erfolgt über Öffnung 27, die Abfuhr über Öffnung 28.

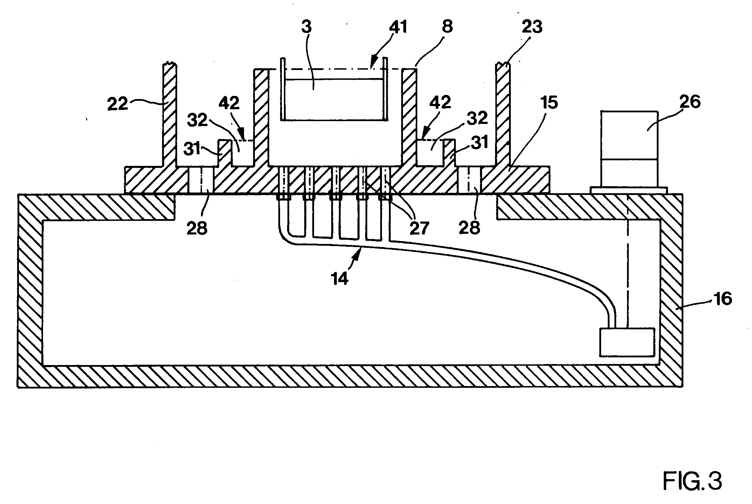

Figur 3 zeigt die anhand der Figuren 1 und 2 erläuterte Vorrichtung im Längsschnitt, wobei das Verhältnis von Höhe zu Breite der Kathoden und Anoden des Elektrodenpaketes 3 erkennbar ist. Bevorzugt wird ein Höhen zu Breitenverhältnis im Bereich von 1:6 bis 1:8 gewählt. Anhand dieser Figur ist erkennbar, wie die Lösung im Zellgehäuse 8 mittels des Rohrverteilersystems über die gesamte Breite der Elektroden geführt ist, wobei die während der elektrolytischen Umsetzung entstehenden Gasblasen aus dem Elektrodenbereich rasch abgeführt werden und somit nur einen geringen Teil der die Elektrodenoberfläche benetzenden Lösungsflüssigkeit verdrängen. Auch hier ist die Öffnung 27 für die Zufuhr der Lösung sowie Öffnung 28 für die Abfuhr der Lösung erkennbar, wobei mittels Pumpe 26 das Rohrverteilersystem 14 über die volle Breite der Elektrodenunterkante gespeist wird. Die entstehenden Gase werden mittels der bereits anhand der Figur 2 erläuterten Gasabzugshaube über Gasableitung 21 abgeführt, wobei die Seitenwände 22,23 das Gas am seitlichen Austritt hindern. Das Flüssigkeitsniveau im Zellgehäuse 8 ist mit Ziffer 41 bezeichnet, das Flüssigkeitsniveau im Auffangbehälter 32 führt die Bezugsziffer 42. Zwecks besserer Übersicht wird auf die Darstellung der zugehörigen Gasabzugsvorrichtung verzichtet.

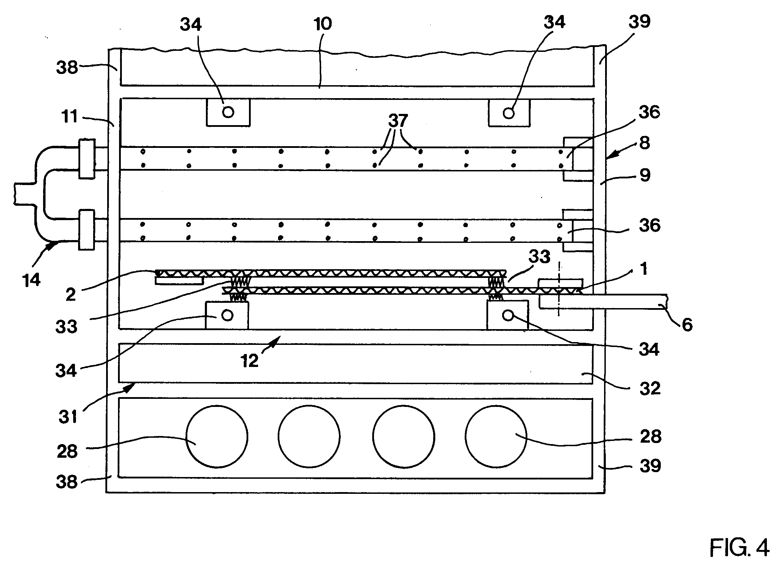

Figur 4 zeigt in der Draufsicht ein Zellengehäuse 8 mit dem im oberen Bereich im Aufbau befindlichen Elektrodenpaket, von dem jedoch lediglich jeweils eine Anode 1 und eine Kathode 2 erkennbar sind; zwischen den Elektroden 1, 2 sind lösungsbeständige, elektrisch isolierende Distanzelemente 33 angeordnet, um einen gleichmäßgen Abstand zwischen den Elektroden zu gewährleisten: die zur Seitenwand 12 des Zellengehäuses 8 gerichteten Distanzelemente 33 sind durch Abstandshalter 34 seitlich abgestützt, wobei erst nach erfolgter Montage sämtliche Elektroden 1, 2 als hier nicht gezeigtes Elektrodenpaket zusammengesetzt sind. Die Halterung des Elektrodenpaketes erfolgt, wie bereits vorstehend beschrieben, mit Hilfe der Stromzuleiter, von denen hier zwecks besserer Übersicht lediglich der positive Stromableiter 6 dargestellt ist.

Weiterhin ist das im unteren Bereich des Zellengehäuses 8 angeordnete Rohrverteilersystem 14 erkennbar, welches im vorliegenden Fall einzelne Rohre 36 mit Austrittsöffnungen 37 aufweist. Die Flüssigkeitsumwälzung erfolgt hier ebenfalls durch eine Pumpe, die jedoch nicht dargestellt ist.

Abweichend zu den vorstehend beschriebenen Ausführungsformen ist gemäß Figur 4 lediglich ein Überlauf der Lösung entlang der Seitenwände 10 und 12 vorgesehen, wobei die stirnseitigen Wände 9 und 11 sowie die sich anschließenden Wandbereiche 38, 39 eine solche Erhöhung aufweisen, um den gerichteten Überlauf in den als Entgasungsbereich dienenden Auffangbehälter zwischen Seitenwand 10 und dem ebenfalls als Wand ausgebildeten zweiten Überlauf 31 zu gewährleisten. Nach Passieren des zweiten Überlaufes 31 strömt die nunmehr entgaste Lösung durch die Abfuhr-Öffnungen 28 in den hier nicht gezeigten Lösungsbehälter zurück.

## Patentansprüche

1. Elektrochemische Zelle zur elektrolytischen Behandlung wässriger Lösungen, insbesondere zur Cyanidentgiftung, Oxidation oder Elektrolyse von Natriumchloridlösung, wobei ein Zellengehäuse langgestreckte plattenförmige, parallel und im Abstand angeordnete Elektroden in Form eines austauschbaren Elektrodenpaketes mit benachbarten, kammartig ineinandergreifenden Elektroden, die abwechselnde Polarität aufweisen, enthält und alle Elektroden jeweils einer Polarität mittels seitlich angeschweißter Stromzuführungen aus lösungsbeständigem Werkstoff an einem der Kontaktierung und Halterung dienenden Stromzuleiter befestigt sind, wobei eine Flüssigkeits-Umwälzvorrichtung zur Anströmung der Elektroden von unten nach oben entlang ihrer Elektrodenfläche und eine Entgasungsvorrichtung mit getrenntem Flüssigkeitsablauf und mit einer getrennten Gasabführung mit Entgasungsbehälter vorgesehen ist, dadurch gekennzeichnet, daß die Elektroden (1,2) in einem wannenförmigen oben offenen Zellgehäuse (8) mit Überlauf angeordnet sind, wobei die Seitenwände in ihrem oberen Teil zumindest teilweise einen Überlauf für die strömende Lösung bilden, und daß das Zellengehäuse zumindest im Bereich des Überlaufs von wenigstens einem Auffangbehälter (32) umgeben ist, wobei der Auffangbehälter selbst einen zweiten Überlauf (31) aufweist, der so angeordnet ist, daß in dem Auffangbehälter ein vorgegebener Flüssigkeitsspiegel aufrechterhalten wird.

2. Elektrochemische Zelle nach Anspruch 1, dadurch gekennzeichnet, daß die Wände (9,10,11,12) des Zellgehäuses (8) eine horizontale, umlaufende, den Überlauf bildende Kante aufweisen.

3. Elektrochemische Zelle nach Anspruch 1 oder 2, dadurch gekennzeichnet, daß die Wände des Auffangbehälters (32) einen horizontalen, umlaufenden, den zweiten Überlauf (31) bildenden Rand aufweisen.

4. Elektrochemische Zelle nach einem der Ansprüche 1 bis 3, dadurch gekennzeichnet, daß sich in Strömungsrichtung gesehen an den zweiten Überlauf (31) weitere Auffangbehälter mit weiteren Überläufen anschließen, wobei die Überläufe eine Kaskade bilden.

5. Elektrochemische Zelle nach einem der Ansprüche 1 bis 4, dadurch gekennzeichnet, daß das Elektrodenpaket parallel zu der Schmalseite der Elektrodenplatten durchströmt wird.

6. Elektrochemische Zelle nach einem der Ansprüche 1 bis 5, dadurch gekennzeichnet, daß das Verhältnis von Breite zu HÖhe der Elektrodenplatten im Bereich von 10:1 bis 5:1 liegt.

7. Elektrochemische Zelle nach einem der Ansprüche 1 bis 6, dadurch gekennzeichnet, daß die Stromzuführungen (4,5) der Kathoden (2) und der Anoden (1) jeweils an sich gegenüberliegenden Schmalseiten der Elektrodenplatten befestigt sind.

8. Elektrochemische Zelle nach einem der Ansprüche 1 bis 7, dadurch gekennzeichnet, daß die Stromzuführungen (4,5) als Kontaktbänder ausgebildet sind, die jeweils im Bereich der Elektrodenkanten nach oben gerichtet an den Elektrodenflächen anliegend befestigt sind, wobei die freien Enden der Kontaktbänder nach oben aus dem wannenförmigen Zellgehäuses (8) herausgeführt und über einen Stromzuleiter (6,7) zwecks Kontaktierung zusammengefaßt sind.

9. Elektrochemische Zelle nach Anspruch 8, dadurch gekennzeichnet, daß das Elektrodenpaket (3) mittels der Stromzuleiter (6,7) in das Zellengehäuse hängend eingesetzt ist.

10. Elektrochemische Zelle nach einem der Ansprüche 1 bis 9, dadurch gekennzeichnet, daß die Elektroden (1,2) aus Streckmetall bestehen.
